(19) **Europäisches Patentamt**

**European Patent Office**

**Office européen des brevets**

(11) Veröffentlichungsnummer: **0 071 869**
**A1**

(12) **EUROPÄISCHE PATENTANMELDUNG**

(21) Anmeldenummer: **82106758.4**

(22) Anmeldetag: **27.07.82**

(51) Int. Cl.³: **B 60 R 9/04**

(30) Priorität: **30.07.81 DE 3130188**

(43) Veröffentlichungstag der Anmeldung: **16.02.83**
**Patentblatt 83/7**

(84) Benannte Vertragsstaaten: **AT CH DE FR IT LI**

(71) Anmelder: **Heinrich Wunder GmbH & Co. KG, Münchener Strasse 80 Postfach 1920, D-8060 Dachau (DE)**

(72) Erfinder: **Burger, Simon, Münchener Strasse 66, D-8047 Karlsfeld (DE)**

(74) Vertreter: **Zmyj, Erwin, Dipl.-Ing., Postfach 95 04 28, D-8000 München 95 (DE)**

(54) **Vorrichtung zum Sichern von Lasten auf Dachlastenträgern für Kraftfahrzeuge.**

(57) Das zur Sicherung einer Last auf einem Dachlastenträger (1) vorgesehene Spannelement (5) dient im gespannten Zustand zur Sicherung der zur Befestigung des Dachlastenträgers am Dach vorgesehenen Schrauben (4, 19), wobei das Spannelement entweder direkt an der Klemmschraube (4) einhängbar oder über ein Kupplungsstück beispielsweise in Form eines an der Schraube schwenkbar gelagerten Einhängebügels (7) festlegbar ist. Das Spannelement kann aber auch die Klemm- bzw. Befestigungsschrauben indirekt sichern, indem es eine für die Klemmschraube vorgesehene Abdeckkappe (17, 24, 26) gegen ein unbefugtes Entfernen sichert, wodurch der Zugriff zur Klemmschraube ausgeschlossen ist. Das Spannelement kann an den Abdeckkappen entweder lösbar mittels Haken (6) oder unlösbar befestigt sein.

0071869

## Vorrichtung zum Sichern von Lasten auf
## Dachlastenträgern für Kraftfahrzeuge

Die Erfindung bezieht sich auf eine Vorrichtung zum
Sichern von Lasten auf Dachlastenträgern für Kraftfahrzeuge, wobei der Dachlastenträger mittels Klemmschrauben
am Kraftfahrzeugdach lösbar befestigbar ist, mit einem am
Dachlastenträger festlegbaren, die Lasten überspannenden und eine abschließbare Spannvorrichtung aufweisenden Spannelement,

Spannelemente in Form von Riemen, die mit Spannvorrichtungen versehen sind, um die Lasten auf Dachlastenträger
sicher festlegen zu können, sind beispielsweise aus der
DE-PS 439 952 bekannt. Da die Spannvorrichtung absperrbar ist, können mit diesen Spannelementen die Lasten auf
dem Dachlastenträger gegen unbefugtes Entfernen gesichert
werden. Bei diesen bekannten Spannelementen bestand
jedoch noch die Gefahr, daß der gesamte Dachlastenträger
vom Dach des Kraftfahrzeuges entfernt werden konnte. Um
dies zu verhindern sind z. B. abschließbare Schutzkappen
bekannt geworden (DE-GM 78 07 135), die die an den Stützfüßen der Dachlastenträger vorgesehenen Klemmschrauben überdecken, so daß diese nicht mehr gelöst werden können.
Dies bedeutet jedoch, daß an jedem Stützfuß des Dachlastenträgers, von denen üblicherweise vier Stück vorgesehen sind, jeweils eine mit einem Schloß versehene
Schutzkappe angeordnet werden muß. In Verbindung mit dem
Schloß in der Spannvorrichtung des Spannelementes sind
bei einem Dachlastenträger, auf dem beispielsweise ein
Surfboard transportiert wird, fünf Schlösser notwendig,
um die Last, z. B. das Surfboard und den Dachlastenträger gegen unbefugtes Entwenden zu sichern.

Aufgabe der Erfindung ist es die Sicherung des Dachlastenträgers zu vereinfachen.

Diese Aufgabe wird ausgehend von der Vorrichtung der
eingangs erläuterten Art erfindungsgemäß dadurch gelöst,
daß das Spannelement im gespannten Zustand nur geringfügig in sich verdrehbar und an den Enden im Gebrauchszustand am Dachlastenträger festgelegt ist und daß das
Spannelement im gespannten und versperrten Zustand direkt
oder indirekt die Klemmschrauben gegen unbefugtes Lösen
sichert und erst nach seinem Verlängern, Entspannen oder
Entfernen ein Lösen der Klemmschrauben ermöglicht. Hierdurch können mit Hilfe eines Spannelementes, das nur ein
Schloß aufweist, zwei gegenüberliegende Befestigungsstellen des Dachträgers am Dach des Kraftfahrzeuges und
selbstverständlich auch die an dem Dachträger aufgelegte
Last gesichert werden. Wenn also der Dachträger 2 quer
verlaufende Tragbügel aufweist die an ihren Enden am
Dach in bekannter Weise mittels Schrauben festgelegt sind,
so ist es zum Sichern dieses Dachlastenträgers erforderlich
zwei Spannelemente vorzusehen, die insgesamt zwei Schlösser aufweisen, während bei dem Stand der Technik für einen
solchen Fall mindestens fünf Schlösser notwendig waren,
wobei die Last dann nur mit einem Spannelement gesichert
war, während bei der Absicherung von vier Befestigungsstellen zwei Spannelemente notwendig sind die aber zu
einer besseren Sicherung der Last führen, da insbesondere
bei langen Lasten, wie z. B. Surfbrettern, ein Spannelement ohnehin nicht ausreichend ist.

Bei der vorliegenden Erfindung ist es gleichgültig ob
die Dachlastenträger mittels Stützfüßen an Dachrinnen
festgeklemmt sind oder ob andere bekannte Arten von Abstützungen am Dach vorgesehen sind. Allen Dachlastenträgern, die entfernbar am Dach angebracht werden können,
ist das Erfordernis der Anordnung von Klemm- bzw. Befestigungsschrauben gemeinsam, die durch ein Spannelement gemäß der Erfindung gegen unbefugtes Lösen gesichert
werden können.

Das Spannelement kann beliebiger Art sein. Es muß nur
im Gebrauchszustand, in welchem es die Last auf dem
Dachlastenträger sichert in sich nicht mehr verdrehbar
oder dehnbar sein, so daß die angestrebte Sicherungsfunktion für die Klemmschrauben erhalten bleibt. Als
nicht einschränkende Beispiele sind im Anspruch 2
mehrere Ausführungsmöglichkeiten des Spannelementes dargelegt.

Eine bevorzugte wenngleich nicht ausschließliche Ausgestaltung besteht darin, daß die Enden des Spannelementes
lösbar am Dachlastenträger befestigbar sind. Diese Ausgestaltung ist deshalb bevorzugt, weil sie universeller einsetzbar ist und in den meisten Fällen ein leichteres
Entfernen der Last vom Dachlastenträger ermöglicht.
Es ist aber auch möglich, daß die Enden des Spannelementes unlösbar am Dachlastenträger befestigt sind und
das Spannelement zum Abheben der Lasten verlängerbar
ist. Hierbei muß das Spannelement so weit verlängerbar
sein, daß die Last vom Dachlastenträger abgenommen
werden kann. Eine solche Ausführungsform wäre beispielsweise zur Sicherung von Surfbrettern denkbar, weil zum
Abnehmen dieser Bretter es ausreichend ist, wenn das
Spannelement um ein verhältnismäßig kurzes Stück verlängert werden kann, weil dann das Surfbrett vom Dachlastenträger im wesentlichen in seiner Längsrichtung
heruntergezogen werden kann.

Eine einfache Art der lösbaren Befestigung des Spannelementes besteht darin, daß das Spannelement an seinen
Enden mit Haken versehen ist, die entweder direkt in
eine Öffnung der Klemmschraube oder ein mit der Klemmschraube verbundenes Kupplungsstück einhängbar sind.

Die Verwendung eines Kupplungsstückes an Stelle der
direkten Befestigung des Hakens an der Schraube empfiehlt
sich dann, wenn die Klemmschraube von der Abmessung her
so klein gehalten ist, daß eine für den Haken notwendige
Öffnung nicht zur Verfügung gestellt werden kann.

Eine besonders einfache Lösung für die Verbindung von
Hakten mit der Klemmschraube über ein Kupplungsstück
besteht darin, daß als Kupplungsstück ein an der Klemmschraube schwenkbar angebrachter Einhängebügel dient.

0071869

Dieser Bügel kann gleichzeitig zum Festdrehen der
Klemmschraube herangezogen werden, so daß ein Werkzeug für die Befestigung des Dachlastenträgers entfallen kann. Wenn der Haken des Spannelementes eingehängt und das Spannelement gespannt ist, läßt sich
der Einhängebügel nicht mehr verschwenken und somit
ist das Drehen der Schraube ebenfalls ausgeschlossen.

Eine weitere vorteilhafte Ausgestaltung besteht darin,
daß als Kupplungsstück eine an der Klemmschraube einhängbare und den Kopf der Klemmschraube abdeckende
Sicherungslasche dient, die mit einer Einhängeöffnung
für den Haken am Spannelement versehen ist. Diese
Art der Sicherung eignet sich insbesondere für solche
Schrauben, die einen Innensechskant aufweisen, der durch
die Sicherungslasche abgedeckt wird.

Die bisher beschriebenen Ausgestaltungsmöglichkeiten
liefen darauf hinaus, daß das Spannelement entweder
direkt oder indirekt mit der Klemmschraube verbunden
werden mußte, um eine Sicherung derselben im gespannten
Zustand des Spannelements zu gewährleisten. Die Erfindung
beinhaltet aber auch solche Lösungsmöglichkeiten, bei
denen das Spannelement nicht auf die Klemmschraube einwirkt sondern mit einem weiteren Teil verbunden ist,
welches einen Zugriff zu der Klemmschraube verhindert.
Nach einer vorteilhaften Ausgestaltung können die
Klemmschrauben von Abdeckkappen abgedeckt sein, die
durch das Spannelement gegen ein Entfernen gesichert
sind.

Eine Ausführungsform die sehr hohe Spannkräfte
aufnehmen kann, besteht darin, daß an den Enden
des Spannelementes Haken vorgesehen sind, von denen
jeder in eine am Dachlastenträger angeordnete Öse
einhängbar ist, welche durch die aufgesetzte Abdeckkappe für die Klemmschraube ragt. Die besondere
Belastbarkeit dieser Ausführungsform ergibt sich
dadurch, daß die Einhängeöse nicht an der Klemmschraube
sondern am Dachlastenträger unmittelbar befestigt ist.

Jede Abdeckkappe kann entweder als loses Teil auf die
Öse aufgesteckt oder schwenkbar am Dachlastenträger
angeordnet sein.

Eine weitere Ausführungsmöglichkeit besteht nach der
Erfindung darin, daß die Abdeckkappe am Dachlastenträger quer zur Spannkraftrichtung nach Art eines
doppelarmigen Hebels schwenkbar gelagert ist und daß
das Spannelement an dem der Klemmschraube abgewandten
Ende mit der Abdeckkappe lösbar oder fest verbunden
ist. Eine lösbare Ausführung ist durch die Anordnung
von Haken, die in entsprechende Öffnungen der Abdeckkappe einhängbar sind, geschaffen, während eine unlösbare Ausgestaltung dadurch verwirklicht werden kann,
daß beispielsweise der Haken zu einer geschlossenen
Öse gebogen wird. In beiden Fällen ist es möglich nach
dem Entspannen des Spanngliedes die Abdeckkappe so
zu verschwenken, daß die Schraube, mit der der Dachlastenträger am Dach befestigt ist, gelöst werden kann.

0071869

Die Erfindung ist in der Zeichnung beispielsweise
dargestellt. In dieser zeigen:

Fig. 1    eine schaubildliche Ansicht eines Stützfusses
          eines Dachlastenträgers mit einer ersten Ausführungsform der Sicherungsvorrichtung;

Fig. 2    eine abgeänderte Ausführungsform einer Sicherungsvorrichtung;

Fig. 3    eine weitere Ausführungsform einer Sicherungsvorrichtung;

Fig. 4    eine Sicherungsvorrichtung mit Abdeckkappe
          für die Klemmschraube; und

Fig. 5 und 6 weitere Ausführungsformen von Sicherungsvorrichtungen mit Abdeckkappen.

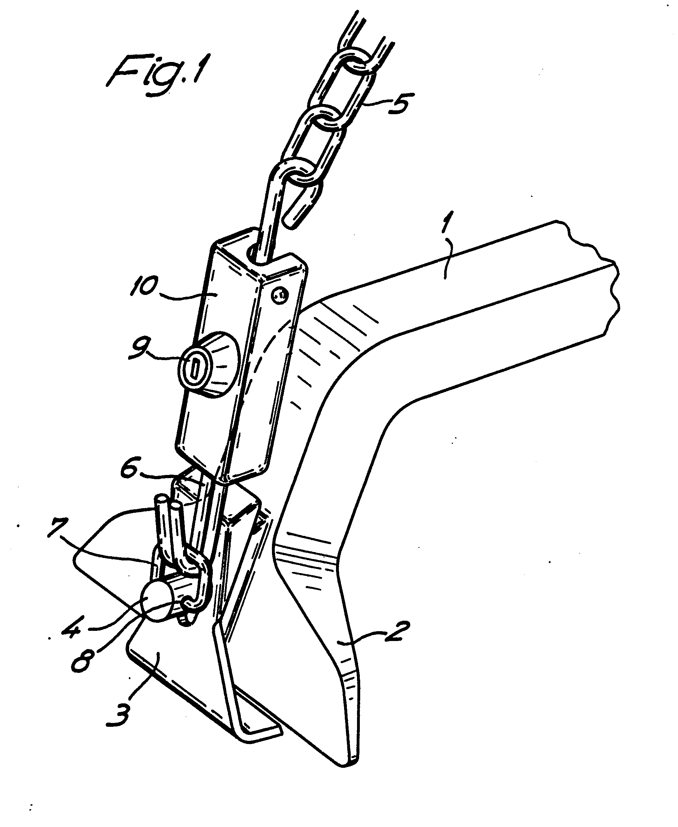

Fig. 1 zeigt in schaubildlicher Darstellung einen Teil
eines Dachlastenträgers und zwar einen Teil eines
quer über das Dach eines Kraftfahrzeuges verlaufenden
Tragbügels 1 an dessen abgebogenem Ende ein Stützfuß
2 vorgesehen ist, der in die Dachrinne des Kraftfahrzeuges einsetzbar und mittels einer Klemmkralle 3 an
der Dachrinne gehalten ist, für deren Befestigung eine
Klemmschraube 4 dient, die in ein Gewinde des Stützfusses 2 einschraubbar ist. Ein Spannelement, welches
zur Sicherung der auf dem Tragbügel auflegbaren Lasten
dient, ist als Kette ausgebildet und mit dem Bezugszeichen 5 versehen. Das Spannelement weist an seinen
Enden jeweils einen Haken 6 auf, der in einen Einhängebügel 7 einhängbar ist, welcher in einer quer laufenden
Bohrung 8 der Klemmschraube 4 schwenkbar gelagert ist.

Eine mit einem Schloß 9 versehene Spannvorrichtung 10
dient zum Spannen und Absperren des Spannelementes 5.
In diesem in Fig. 1 dargestellten Zustand läßt sich die
Klemmschraube 4 nicht mehr lösen, da das in sich nur
geringfügig verdrehbare Spannelement 5 unter einer
solchen Zugkraft steht, daß der Einhängebügel 7 nicht
mehr oder nur unwesentlich verschwenkt werden kann, wodurch ein Verdrehen der Klemmschraube 4 ausgeschlossen
ist. Bei dieser Ausführungsform dient der Einhängebügel
7 gleichzeitig als Werkzeug zum Festziehen der Klemmschraube 4.

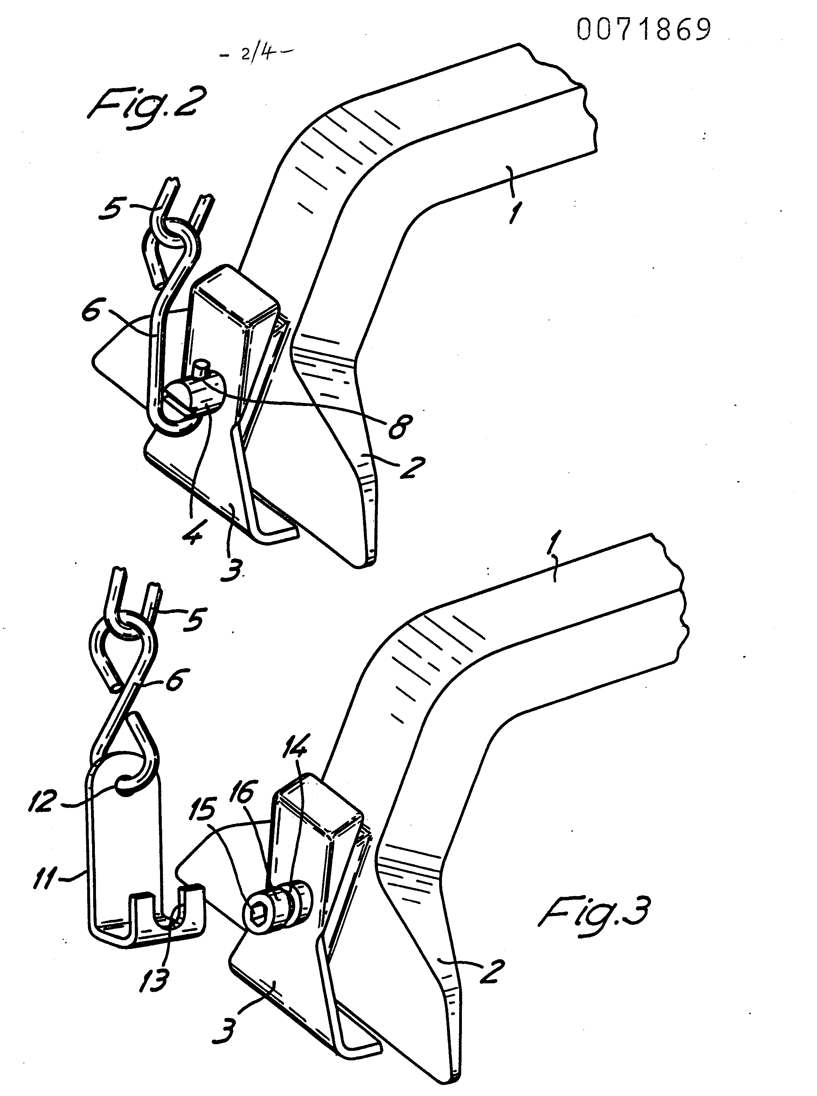

In Fig. 2 ist der Haken 6 des Spannelementes 5 direkt
in die quer laufende Bohrung 8 der Klemmschraube 4
einhängbar, die zum Festklemmen der Klemmkralle 3
dient.

In Fig. 3 ist der Haken 6 des Spannelementes 5 an
einer Sicherungslasche 11 eingehängt die mit einer
Einhängeöffnung 12 versehen ist und an ihrem unteren
U-förmig abgebogenen Ende mit einer Aussparung 13
versehen ist, so daß es möglich ist die Sicherungslasche 11 in einen Umfangsschlitz 14 einer mit einem
Innensechskant 15 versehenen Klemmschraube 16 einzuhängen, die zur Festlegung der Klemmkralle 3
dient. Im eingehängten und verspannten Zustand deckt
die Sicherungslasche 11 den Innensechskant ab, so daß
die Klemmschraube 16 nicht gelöst werden kann.

Während bei den bisherigen Ausführungsformen nach den
Fig. 1 bis 3 der Haken entweder direkt oder indirekt
an der Klemmschraube festhängbar ist, weichen die nachfolgenden Ausführungsformen insofern ab, als der Haken bei diesen Ausführungsformen dazu dient Abdeckkappen für die Klemmschrauben gegen ein unbefugtes
Entfernen zu sichern.

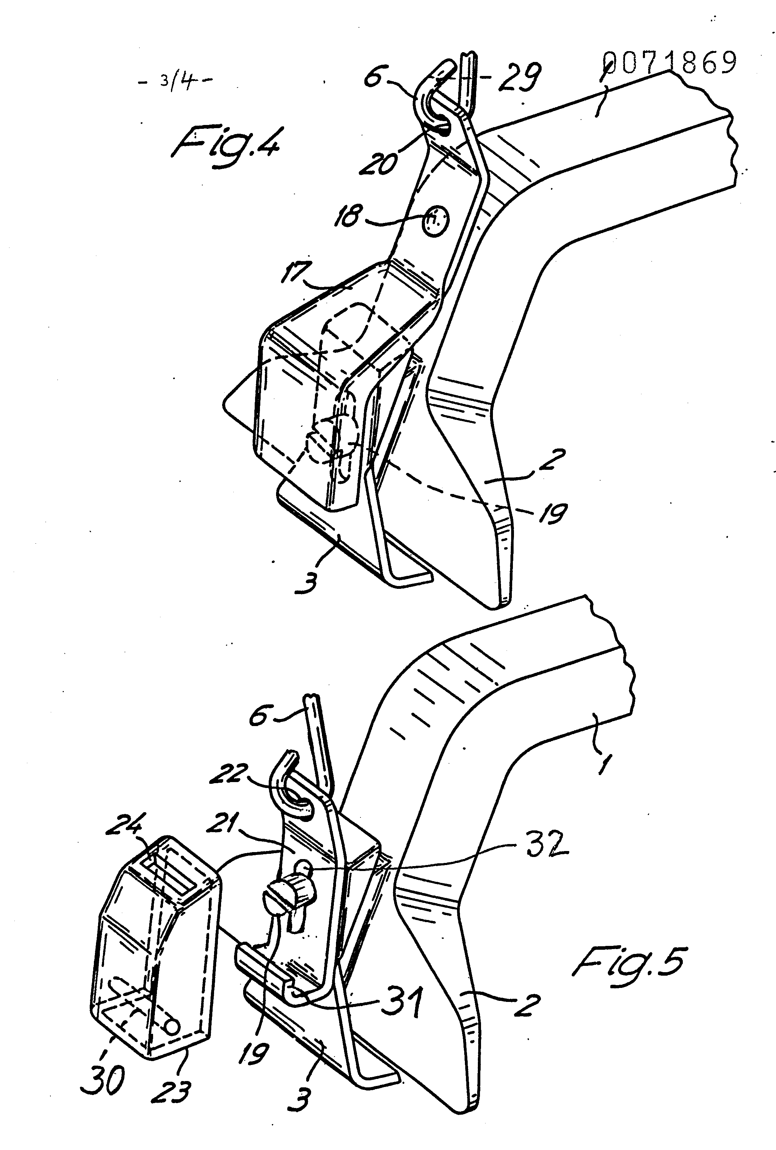

Bei der Ausführungsform gemäß Fig. 4 ist an dem
Stützfuß 2 des Tragbügels 1 eine Abdeckkappe 17
mittels eines Niets 18 schwenkbar gelagert und dient
zum Überdecken der Klemmschraube 19, wenn der Haken 6
in eine Einhängeöffnung 20 eingehängt und das Spannelement 5 verspannt ist. In diesem Zustand läßt
sich die Abdeckkappe 17 nicht mehr verschwenken. Die
Lagerung mittels des Niets 18 ist so ausgeführt, daß
die Abdeckkappe mit ihrem unteren Ende etwas vom Stützfuß abgehoben und dann zur Seite geschwenkt werden
kann, wenn das Spannelement 5 lose ist. In Fig. 4 sind
zwei Möglichkeiten der Ausbildung des Hakens 6 dargestellt und zwar wird durch die gestrichelte Linie 29
eine Hakenform begrenzt, die eine lösbare Befestigung
des Spannelementes an der Abdeckkappe ermöglicht,
während in der vollständig ausgezogenen Ausgestaltung
der Haken zu einer Öse gebogen und damit nicht mehr
aus der Einhängeöffnung 20 herausgezogen werden kann.
In diesem Falle muß das Spannelement entweder am
gegenüberliegenden Ende aushängbar oder wenn es auch
dort fest eingehängt ist so weit verlängerbar sein,
daß die Last vom Dachlastenträger abgenommen werden
kann.

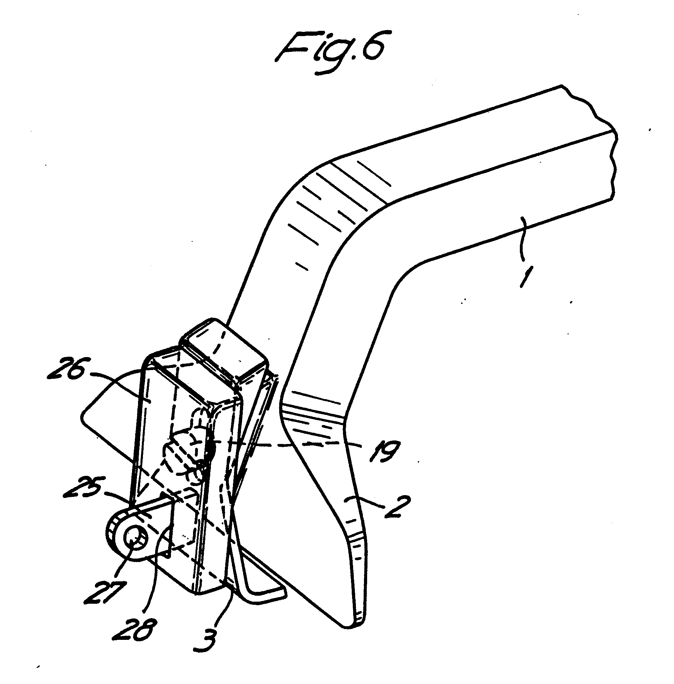

Bei der Ausführungsform nach Fig. 5 ist eine Sicherungslasche 21 beispielsweise durch Schweißen fest mit der
Klemmkralle 3 verbunden, und weist ebenso wie die darunterliegende Klemmkralle einen Längsschlitz 32 für den Durchtritt der Klemmschraube 19 auf. Dieser Längsschlitz ist notwendig um verschiedenen Dickenabmessungen der Dachrinne am Kraftfahrzeug ausgleichen zu können. Der Haken 6 des Spannelementes 5 ist in eine Einhängeöffnung 22 der Sicherungslasche 21 einhängbar und sichert in diesem Zustand eine Abdeckkappe 23, die an ihrem oberen Ende einen Schlitz 24 aufweist, mit dem diese Abdeckkappe vom oberen Ende der Sicherungslasche 21 aus aufsteckbar ist. Ein Abheben des unteren Endes der Abdeckkappe 23 ist nicht möglich, weil ein im Inneren der Abdeckkappe 23 vorgesehener fest mit der Abdeckkappe verbundener Stift 30 hinter das nach oben abgebogene Ende 31 der Sicherungslasche greift.

Bei der Ausführungsform nach Fig. 6 ist an dem Stützfuß 2 des Tragbügels 1 eine Öse 25 befestigt, die durch die Klemmkralle 3 und eine Abdeckkappe 26 hindurchragt. Die Öse 25 weist eine Öffnung 27 zum Einhängen des Hakens 6 des Spannelementes 5 auf. Wenn die Abdeckkappe 26, die mit einem Schlitz 28 versehen ist, durch die die Öse 25 hindurchpaßt, aufgesteckt ist, so kann diese Abdeckkappe nicht mehr abgezogen werden, wenn der Haken 6 eingehängt und die Spannvorrichtung gespannt und abgesperrt ist. Somit ist die Klemmschraube 19 für Unbefugte nicht zugänglich und der Dachlastenträger am Dach gesichert.

0071869

In den dargestellten Ausführungsformen ist jeweils
ein Dachlastenträger gezeigt, der mit Stützfüssen in
der Dachrinne des Kraftfahrzeuges abgestützt und mittels
einer Klemmkralle und einer Klemmschraube festgelegt ist.
Diese Ausgestaltung der Dachlastenträger ist zur Zeit
noch die am häufigsten anzutreffende Ausgestaltung,
jedoch ist die Erfindung auch bei solchen Dachlastenträgern anwendbar, bei denen der Stützfuß auf dem
Dach aufruht und eine größer ausgebildete Klemmkralle
bis zum unteren Rand des Autodaches greift. Ebenso
kann die Erfindung auch bei solchen Dachlastenträgern
zur Anwendung kommen, bei denen die Stützfüße mittels
Schrauben befestigbar sind, die in Gewindebuchsen einschraubbar sind, welche bereits im Dach des Kraftfahrzeuges vorgesehen sind. Selbstverständlich ist die
Erfindung auch bei solchen Dachlastenträgern anwendbar, die durch die beispielshafte Aufzählung nicht
erfaßt sind.

Patentansprüche

1. Vorrichtung zum Sichern von Lasten auf Dachlastenträgern für Kraftfahrzeuge, wobei der Dachlastenträger mittels Klemmschrauben am Kraftfahrzeugdach lösbar befestigbar ist, mit einem am Dachlastenträger festlegbaren, die Lasten überspannenden und eine abschließbare Spannvorrichtung aufweisenden Spannelement, dadurch g e k e n n -
z e i c h n e t , daß das Spannelement (5) im
gespannten Zustand nur geringfügig in sich verdrehbar und an den Enden im. Gebrauchszustand am Dachlastenträger festgelegt ist und daß das Spannelement
(6) im gespannten und versperrten Zustand direkt
oder indirekt die Klemmschrauben gegen ein unbefugtes Lösen sichert und erst nach seinem Verlängern, Entspannen oder Entfernen ein Lösen der
Klemmschrauben ermöglicht.

2. Vorrichtung nach Anspruch 1, dadurch g e k e n n -
z e i c h n e t , daß das Spannelement als Kette,
Band, Gurt, Bügel oder Seil ausgebildet ist.

3. Vorrichtung nach Anspruch 1 oder 2, dadurch g e - k e n n z e i c h n e t , daß die Enden des Spannelementes (5) lösbar am Dachlastenträger (1) befestigbar sind.

4. Vorrichtung nach Anspruch 1 oder 2, dadurch g e - k e n n z e i c h n e t , daß die Enden des Spannelementes (5) unlösbar am Dachlastenträger (1) befestigt sind und das Spannelement (5) zum Abnehmen der Lasten verlängerbar ist.

5. Vorrichtung nach einem der Ansprüche 1 bis 3, dadurch g e k e n n z e i c h n e t , daß das Spannelement (5) an seinen Enden mit Haken (6) versehen ist, die entweder direkt in eine Öffnung (8) der Klemmschraube (4) oder ein mit der Klemmschraube verbundenes Kupplungsstück (7, 11) einhängbar sind.

6. Vorrichtung nach Anspruch 5, dadurch g e k e n n - z e i c h n e t , daß als Kupplungsstück ein an der Klemmschraube schwenkbar angebrachter Einhängebügel (7) dient.

7. Vorrichtung nach Anspruch 5, dadurch g e k e n n - z e i c h n e t , daß als Kupplungsstück eine an der Klemmschraube (16) einhängbare und den Kopf der Klemmschraube abdeckende Sicherungslasche (11) dient, die mit einer Einhängeöffnung (12) für den Haken (6) am Spannelement (5) versehen ist.

8. Vorrichtung nach einem der Ansprüche 1 bis 4, dadurch g e k e n n z e i c h n e t , daß die Klemmschrauben (19) von Abdeckkappen (17, 23, 26) abgedeckt sind, die durch das Spannelement (5) gegen ein Entfernen gesichert sind.

9. Vorrichtung nach Anspruch 8, dadurch g e k e n n - z e i c h n e t , daß an den Enden des Spannelementes (5) Haken (6) vorgesehen sind, die in am Dachlastenträger (1) angeordnete Ösen (25) einhängbar sind, welche durch die aufgesetzten Abdeckkappen (26) für die Klemmschrauben (19) ragen.

10. Vorrichtung nach Anspruch 9, dadurch g e k e n n - z e i c h n e t , daß die Abdeckkappe (26) als loses Teil auf die Öse (25) aufsteckbar ist.

11. Vorrichtung nach Anspruch 9, dadurch g e k e n n - z e i c h n e t , daß die Abdeckkappe schwenkbar am Dachlastenträger (1) angeordnet ist.

12. Vorrichtung nach Anspruch 8, dadurch g e k e n n - z e i c h n e t , daß die Abdeckkappe (17) am Dachlastenträger quer zur Spannkraftrichtung nach Art eines doppelarmigen Hebels schwenkbar gelagert ist und daß das Spannelement (5) an dem der Klemmschraube (19) abgewandten Ende mit der Abdeckkappe (17) lösbar oder fest verbunden ist.

Fig.1

0071869

Fig.2

Fig.3

0071869

Fig.4

Fig.5

Fig.6

Europäisches
Patentamt

**EUROPÄISCHER RECHERCHENBERICHT**

0071869
Nummer der Anmeldung

EP 82 10 6758.4

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| A | GB - A - 1 068 053 (RENAULT) <br> * Fig. 1 * <br><br> -- | 1 | B 60 R 9/04 |
| A | DE - A1 - 2 345 851 ( R. BINDHARDT) <br> * Seite 6, Zeilen 14 bis 18 * <br><br> -- | | |
| A | DE - U - 1 956 208 (F. MAIER) <br> * Fig. 1 * <br><br> -- | | |
| D,A | DE - C - 439 952 (J. BLANCHARD) <br><br> -- | | **RECHERCHIERTE SACHGEBIETE (Int. Cl.³)** |
| D,A | DE - U1 - 7 807 135 (ORIS-METALLBAU) <br><br> ---- | | B 60 R 9/00 |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 30-09-1982 | BECKER |

EPA form 1503.1   06.78